(19) Europäisches Patentamt
European Patent Office
Office européen des brevets

(11) **EP 3 825 922 A1**

(12) **EUROPEAN PATENT APPLICATION**

(43) Date of publication:
**26.05.2021 Bulletin 2021/21**

(51) Int Cl.:
*G06N 3/04* (2006.01)    *G06N 3/08* (2006.01)

(21) Application number: **19211218.3**

(22) Date of filing: **25.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Continental Automotive GmbH
30165 Hannover (DE)**

(72) Inventors:
• **Strenner, Balazs
90411 Nürnberg (DE)**
• **Nemes, Csaba
90411 Nürnberg (DE)**

(74) Representative: **Continental Corporation
c/o Conti Temic microelectronic GmbH
Intellectual Property
Sieboldstraße 19
90411 Nürnberg (DE)**

(54) **METHOD AND SYSTEM FOR DETERMINING TASK COMPATIBILITY IN NEURAL NETWORKS**

(57)    The invention relates to a computer-implemented method for determining clusters of tasks, said clusters at least partially including multiple tasks (t1 - t5) to be executed in a joint encoder portion (E1 - E3) of a neural network (NN). The invention suggests estimating information share measures based on an auxiliary neural network (AUXNN) in order to determine clusters of tasks to be executed in a joint encoder portion (E1 - E3) of a neural network (NN).

Fig. 2

EP 3 825 922 A1

**Description**

The present invention relates generally to the field of artificial neural networks. More specifically, the invention relates to a method and a system for determining the compatibility of tasks to be grouped in cluster of tasks in order to be executed in a joint encoder portion of a neural network. The neural network may be, for example, a deep neural network.

Specifically in the field of image processing, it is known to process image information according to certain tasks, specifically, perception related tasks, i.e. if certain features can be perceived in an image. Such tasks are, for example, detection of pedestrians, detection of traffic signs, pose detection of pedestrians, detection of drivable area etc.

Specifically in vehicles, computational resources are limited. As such, detection software, specifically neural networks, shall be optimized to execute as many tasks as possible in order to reduce computational complexity. In other words, shared neural networks are used which are trained to perform multiple tasks (also referred to as multi-task learning) to meet computational resource constraints. So, a practical approach is to partition the tasks into clusters of tasks and to train said clusters of tasks together. A separate model is trained for each cluster, and the overall compute budget of the models is set to meet the hardware constraints.

However, not all tasks perform well together on a shared neural network. In other words, the efficiency gain due to task clustering strongly depends on the compatibility of tasks to be executed by a joint neural network, specifically a joint encoder portion of a neural network. So, the key to the success of multitask learning is to find out which tasks should be trained together in a joint neural network, specifically a joint encoder portion.

An approach for measuring task compatibility is to explicitly train all combinations of tasks on a range of models (which may have different size). After training all combinations, a subset of models is selected which covers all tasks, which meets the hardware constraints, and which executes each task with required accuracy. However, in real-life use cases, training all combinations is computationally expensive, takes long time and is therefore impractical in most fields of application.

It is an objective of the embodiments of the invention to provide a method for determining clusters of tasks to be executed in a joint encoder portion of a neural network which on the one hand requires low computational time and resources for predicting a resource-efficient multi-task setup of a neural network and, on the other hand, provides a multi-task setup of a neural network with high computational performance. The objective is solved by the features of the independent claims. Preferred embodiments are given in the dependent claims. If not explicitly indicated otherwise, embodiments of the invention can be freely combined with each other.

According to an aspect, the invention refers to a method for determining clusters of tasks, said clusters at least partially including multiple tasks to be executed in a joint encoder portion of a neural network. The method comprises the following steps:

As a first step, information regarding a set of tasks to be processed by a neural network is provided. So, in other words, it is defined which tasks have to be performed on input information. Said input information may be image information provided by an automotive sensor, for example, a camera etc.

As a further step, a first neural network is trained for a first task of the set of tasks and a second neural network is trained for a second task of the set of tasks. Said training includes adapting weights of a neural network in order to improve the performance of the neural network for the respective task.

In addition, an estimation neural network is formed. Said estimation neural network comprises said trained first neural network, said trained second neural network and an auxiliary neural network which receives information of the trained first and second neural network. The auxiliary neural network is configured to derive information indicative for the information overlap between the output of the trained first neural network and trained second neural network.

After forming the estimation neural network, image information is provided as an input to the estimation neural network. Based on said image information, trained first neural network provides first encoded image information and trained second neural network provides second encoded image information. As first neural network is trained for said first task and second neural network is trained for said second task, first encoded image information includes information specific to said first task and second encoded image information includes information specific to said second task. For example, if first task refers to detection of pedestrians, first encoded image information, for example, provides information indicative if one or more pedestrians are detected within said image information.

Based on said auxiliary neural network, an information share measure is estimated. Said information share measure is a measure regarding how much information contains second encoded image information about first encoded image information or vice versa. In other words, information share measure may be indicative for an overlap score which describes an information overlap between the output of the first and second encoded image information. Specifically, said estimated information share value may be conditional entropy of second encoded image information with respect to first encoded image information, or vice versa or information derived from said conditional entropy.

In order to be able to compare task tuples and their suitability to be processed in a joint encoder portion, the steps of training neural networks for respective tasks, forming an estimation neural network, providing image information to said estimation neural network and estimating an information share measure are repeated for further tuples of tasks, thereby obtaining multiple information share measures for different tuples of tasks.

In addition, a threshold value for said multiple information share measures is provided, said threshold value indicating a limit for the information overlap according to which a pair of tasks should be executed in a joint encoder portion of a neural network. More specifically, the threshold value may provide an upper bound, i.e. an information share measure below said upper bound may indicate that it is advantageous to process said tuple of tasks in a joint encoder portion.

Finally, clusters of tasks to be executed in a joint encoder portion of a neural network are determined based on said information share measures and the threshold value.

Said method is advantageous because based on upper-mentioned method steps it is possible to predict a multitask set-up of a neural network with reduced computational effort, wherein the predicted multitask set-up of neural network provides high performance at given computational resources.

According to an embodiment, the step of estimating an information share measure based on said auxiliary neural network includes approximating an upper bound of information missing in second encoded image information compared to first encoded image information. Alternatively, the step of estimating an information share measure based on said auxiliary neural network includes approximating a lower bound of information included in second encoded image information compared to first encoded image information. Based on at least one of said bounds it is possible to assess how helpful second image information is to deduce first image information from second image information and therefore to assess the suitability of tasks to be processed together in a joint encoder portion.

According to an embodiment, the step of estimating an information share measure includes reducing a cross entropy loss defined on the information output of said auxiliary neural network by training the auxiliary neural network. More in detail, the auxiliary neural network may implement a parametrized probability function based on which conditional entropy between first and second encoded image information can be deduced. By training the auxiliary neural network, the parameters of the probability function can be refined successively thereby improving the accuracy of the probability function and therefore improving the estimate of information share measure.

According to an embodiment, the step of estimating an information share measure includes training said auxiliary neural network by adapting the weights of said auxiliary neural network and keeping the weights of trained first neural network and the weights of trained second neural network constant. So, in other words, first and second neural networks are trained in a first step and the outputs of said trained neural networks are taken as an input while training the auxiliary neural network in a further step. Thereby, the complexity of training the estimation neural network is reduced.

According to an embodiment, the step of estimating an information share measure is performed based on a variational approach, specifically, based on variational mutual information maximization approach. Said approach in advantageous because based on variational approach it is possible to derive a bound for information share measure, specifically, for said conditional entropy and said bound is sufficient for comparing the suitability of each task tuple of multiple tuples of tasks to be processed in a joint encoder portion.

According to an embodiment, the step of training a first neural network comprises training an encoder of the first neural network for the first task and the step of training a second neural network comprises training an encoder of the second neural network for the second task. Thereby, first and second neural networks are optimized for processing image information according to a specific task, for example, an image task.

According to an embodiment, the step of estimating an information share measure based on said auxiliary neural network comprises choosing a parametrizable distribution, said parametrizable distribution providing a parametrizable probability distribution function which can be used for determining the conditional entropy of first encoded image given second encoded image. In other words, a parametrizable distribution is selected in a first step, said parametrizable distribution implementing a parametrizable probability distribution function. After determining the parameters of said probability distribution function, summing up what the probability distribution function provides for each input image in the validation data set, gives a tight estimate of conditional entropy between first and second encoded image, that is how much information exists in the first encoded image which was not contained in the second encoded image.

According to an embodiment, the step of estimating an information share measure based on said auxiliary neural network comprises determining parameters of said parametrizable distribution by training the auxiliary neural network in order to obtain said probability distribution function. More in detail, by training the auxiliary neural network, the parameters of probability distribution function are optimized successively and the Kullback-Leibler-distance indicating a measure of how one probability distribution (Q) is different from a second probability distribution (P) is minimized. Thereby, the estimation of information share measure is improved.

According to an embodiment, the step of estimating an information share measure based on said auxiliary neural network comprises calculating information share measures for multiple different data points of multi-dimensional image information and calculating a mean information share measure by averaging said information share measures. Said averaging further improves estimating which tuples of clusters should be grouped together and should be processed by a joint encoder portion.

According to an embodiment, information share measures for different tuples of tasks, specifically for all tuples of tasks, are calculated in both directions, namely, per each tuple of tasks, a first information share measure being indicative that certain information regarding a second task is also included in first encoded image information, given the fact that said information regarding a second task is included in second encoded image information and a second information share measure being indicative that certain information regarding a first task is also included in second encoded image information, given the fact that said information regarding a first task is included in first encoded image information. Calculating of information share measure in both directions is advantageous because information share measure is not symmetric, i.e. upper-mentioned first and second information share measures of a certain task tuple are different. By considering both directions, it can be checked if both information share measures indicate that the task tuple is suitable for being processed in a joint encoder portion.

According to an embodiment, the step of determining clusters of tasks comprises grouping tasks together to be executed in a joint encoder portion of a neural network if said first and second information share measure is below the determined threshold value. Thereby the performance of a neural network comprising multi-task architecture can be further improved because information share measures referring to both directions are considered for deciding whether a tuple of task should be processed by a joint encoder portion of a neural network or not.

According to an embodiment, the step of determining clusters of tasks is performed such that the number of task groups and therefore the number of encoder portions performing said task groups is minimized. Thereby the processing performance of the resulting neural network used for processing the plurality of tasks is further improved.

According to an embodiment, computing resources are allocated to each encoder portion of the neural network based on the number of tasks being handled by the respective encoder portion. Specifically, an encoder portion handling two tasks (so-called joined encoder portion) is provided with twice the computing resources than an encoder portion handling only one task. Thereby, a distribution of computing resources according to the computational load of the respective encoder portion is obtained.

According to an embodiment, the set of tasks to be processed by a neural network are image tasks. The image tasks may be, for example, image tasks in traffic environments, for example, object detection, object classification, traffic sign detection, pose detection, detection of drivable area etc.

According to an embodiment, the method may be performed by a computing entity included in a vehicle, the computing entity implementing a neural network for processing a set of image tasks.

According to a further aspect, the invention relates to a system for determining clusters of tasks, said clusters at least partially including multiple tasks to be executed in a joint encoder portion of a neural network. The system is configured to execute the steps of:

> a) Providing information regarding a set of tasks to be processed by a neural network;
> b) Training a first neural network for a first task of the set of tasks and a second neural network for a second task of the set of tasks;
> c) Forming an estimation neural network, said estimation neural network comprising said trained first neural network, said trained second neural network and an auxiliary neural network which receives information of the trained first and second neural network;
> d) Providing image information as an input to the estimation neural network based on which trained first neural network provides first encoded image information and trained second neural network provides second encoded image information;
> e) Estimating an information share measure based on said auxiliary neural network, said information share measure being a measure regarding how much information contains second encoded image information about first encoded image information or vice versa;
> f) Repeating steps b) - e) for further tuples of tasks, thereby obtaining multiple information share measures for different tuples of tasks;
> g) Providing a threshold value for said multiple information share measures, said threshold value indicating a limit for the information overlap according to which a pair of tasks should be executed in a joint encoder portion of a neural network;
> h) Determining clusters of tasks to be executed in a joint encoder portion of a neural network based on said information share measures and the threshold value.

The term "vehicle" as used in the present disclosure may refer to a car, truck, bus, train or any other crafts.

The term "joined encoder portion" as used in the present disclosure may refer to an encoder of a neural network comprising an encoder-decoder-architecture, wherein said encoder processes multiple tasks.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:

Fig. 1 shows a schematic diagram of a neural network comprising multiple encoder portions and multiple decoders, the encoder portions at least partially being configured to process multiple tasks (so-called joint encoder);

Fig. 2 schematically illustrates an estimation neural network comprising first and second neural networks and an auxiliary neural network for estimating task compatibility;

Fig. 3 schematically illustrates mutual information and conditional entropy of first and second neural networks which provide first and second encoded image information;

Fig. 4 illustrates a table, wherein the table entries indicate information share measures for respective tuples of tasks;

Fig. 5 schematically illustrates the basic architecture of a neural network comprising a multitask architecture according to task compatibility information included in table of Fig. 4; and

Fig. 6 shows a schematic block diagram illustrating the steps of a method for determining clusters of tasks to be executed in a joint encoder portion.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein.

Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

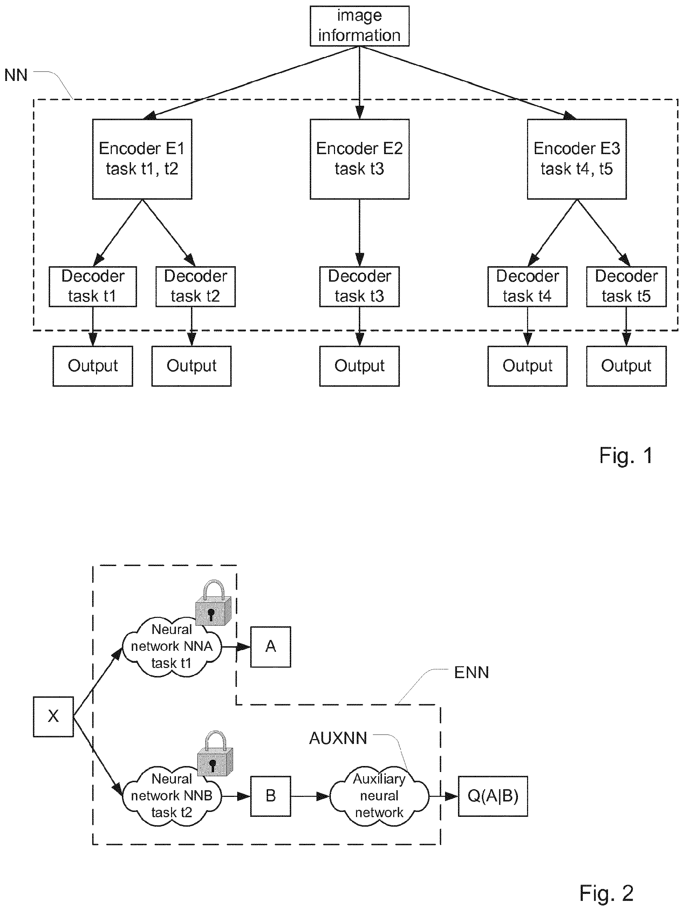

Fig. 1 shows a schematic block diagram of a neural network NN. The neural network NN is configured to process image information in order to perform tasks t1 - t5, preferably, multiple image tasks. For example, the neural network 1 is configured to perform image tasks like detection of pedestrians, traffic signs and/or a drivable area within the image or detecting the pose or motion of a pedestrian. It is worth mentioning that the invention is not limited to said image tasks but can be used for further image issues.

The neural network NN comprises an encoder and a decoder. The encoder comprises multiple encoder portions E1 to E3. At least one of the encoder portions E1 - E3 is a joint encoder portion which is trained to perform two tasks. In the present example, encoder portions E1 and E3 are joint encoder portions wherein encoder portion E1 is configured to handle tasks t1 and t2 and encoder portion E3 is configured to handle tasks t4 and t5.

The decoder of neural network NN comprises multiple decoder portions, wherein each decoder portion is configured to perform one task of said set of tasks. Therefore, the output of a joint encoder portion is coupled with the inputs of two decoder portions, wherein each decoder portion handles exactly one task of the pair of tasks handled by the joint encoder portion.

Such neural network architecture with task clustering is beneficial because computational resources can be reduced by grouping tasks together and handling a group of tasks in one encoder portion which is trained for handling said group of tasks.

In order to determine pairs of tasks which lead to reduction of computational resources if handled in a joint encoder portion, it is necessary to find out which tasks of a set of tasks should be grouped together in order to be handled by a joint encoder portion.

In the following, a method and system for determining clusters of tasks to be executed in a joint encoder portion of a neural network are described based on the schematic diagram shown in Fig. 2.

In Fig. 2, an estimation neural network ENN is used to develop a score which is an indicator for the suitability of a pair of tasks to be handled by a joint encoder portion.

The estimation neural network ENN receives image information X at its input. The estimation neural network ENN includes multiple subnetworks. Image information X is provided to a first neural network NNA and a second neural network NNB. In other words, first and second neural networks NNA, NNB receive the same image information X at its input. The first neural network NNA is a neural network being trained for handling task t1. The second neural network NNB is a neural network being trained for handling task t2 which is different to task 1. For example, task t1 may be a task for detecting pedestrians and task t2 may be a task for detecting traffic signs.

By processing image information X by said first neural network NNA, first encoded image information A is provided at the output of first neural network NNA. Similarly, by processing image information X by said second neural network NNB, second encoded image information B is provided at the output of second neural network NNB.

Due to training first and second neural networks NNA, NNB for the respective tasks, first encoded image information A contains information regarding task t1 and second encoded image information B contains information regarding task t2.

The estimation neural network ENN further comprises an auxiliary neural network AUXNN. In the present example, the auxiliary neural network AUXNN receives second encoded image information B provided by second neural network NNB. Based on the auxiliary neural network AUXNN, an information share measure is estimated, said information share measure being a measure regarding how much information contains second encoded image information B about first encoded image information A. The information share measure can be used to define clusters of tasks which are suitable to be grouped together to be handled in a joint encoder portion.

In order to provide a mathematical basis for the detailed description of the method and system for determining clusters of tasks to be executed in joint encoder portions, in the following a mathematical background for estimating an upper bound of how much information comprise second encoded image information B about first encoded image information A.

The basis of the present invention is the finding that mutual information I(A, B) between first encoded image information A associated with task t1 and second encoded image information B associated with task t2 is a reliable indicator whether it is beneficial handling tasks t1 and t2 in a joint encoder portion or not.

Mutual information I(A;B) between first encoded image information A and second encoded image information B can be defined as:

$$I(A;B) = H(A) - H(A|B); \text{ (equation 1)}$$

wherein

$H(A)$ is the entropy of first encoded image information A and $H(A|B)$ is conditional entropy of first encoded image information A knowing that second encoded image information B occurred.

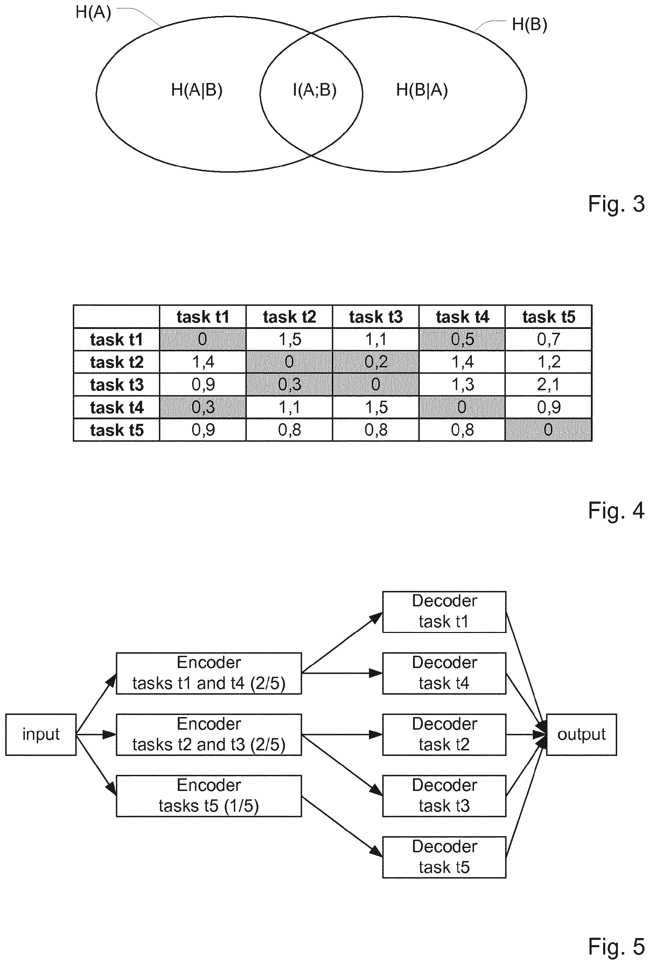

Fig. 3 illustrates the relationship of $I(A;B)$, $H(A)$ and $H(A|B)$ in a schematic diagram.

Reordering the right side of equation 1 and reformulating conditional entropy $H(A|B)$ leads to

$$I(A;B) = E_{B \sim P(B)}[E_{A_0 \sim P(A|B)} log P(A_0|B)] + H(A); \quad \text{(equation 2)}$$

Here, P(A|B) denotes the conditional probability of occurrence of first encoded image information A knowing that second encoded image information B occurred.

The entropy H(A) is not known but can be neglected because not the absolute value of I(A;B) is necessary but multiple mutual information values I(A;B), I(A;C), ..., I(A;X) has to be compared which all comprise constant term H(A). Therefore, equation 2 can be rewritten because it is known that entropy H(A) is always a positive number.

$$I(A;B) \geq E_{B \sim P(B)}[E_{A_0 \sim P(A|B)} log P(A_0|B)]; \quad \text{(equation 3)}$$

Equation 3 can be rewritten by using mathematical approach called Variational Mutual Information Maximization. Said approach teaches that a log(P) function, which can not be computed directly due to hardware and/or time constraints, can be replaced by any random probability function Q and the difference will be the Kullback-Leibler-distance $D_{KL}(P;Q)$ between P and Q.

$$I(A;B) \geq E_{B \sim P(B)}[E_{A_0 \sim P(A|B)} log Q(A_0|B) + D_{KL}(P;Q)]; \quad \text{(equation 4)}$$

It is a property of Kullback-Leibler-distance that it is always a positive number, so if it is skipped in case of an approximation step, the rest will be a lower bound on equation 3 and on the mutual information according to Equation 1.

$$I(A;B) \geq E_{B \sim P(B)}[E_{A_0 \sim P(A|B)} log Q(A_0|B)]; \quad \text{(equation 5)}$$

By using said variational approach and assuming that the term according to equation 5 is maximized when training the auxiliary neural network AUXNN providing Q function, the function $Q(A_0|B)$ approximates to $P(A_0|B)$, i.e.

Kullback-Leibler-distance gets zero.

Hence, after training the auxiliary neural network AUXNN, equation 5 can be used as sufficient estimate of equation 3, which itself is a practical lower bound on the mutual information I(A;B).

So, as a consequence, by training auxiliary neural network AUXNN, a probability function is achieved which provides a good approximation for mutual information and said mutual information itself can be used as an indicator regarding which task tuples should be processed in a joint encoder portion.

In the following, the method and system for determining clusters of tasks to be executed in joint encoder portions based on estimation neural network ENN is explained in greater detail.

Broadly, the auxiliary neural network AUXNN is used to determine parameters of a parametrized probability function Q(A|B), which defines the probability event A occurring given that event B has occurred. Based on said parametrized probability function Q(A|B), which parameters can be evaluated by training the auxiliary neural network AUXNN, it is possible to approximate an upper bound of information content missing from second encoded image information B compared to first encoded image information A, that is conditional entropy H(A|B). Said conditional entropy H(A|B) is a measure regarding how difficult it is for task t1 to be executed together with task t2 in a shared multitask fashion.

More in detail, for a certain tuple of tasks t1, t2, first neural network NNA and second neural network NNB is trained. Each of said first and second neural networks NNA, NNB comprise an encoder and a decoder head which are specifically trained for the respective task t1, t2. After training, parameters of said trained first and second neural networks NNA, NNB are fixed and not changed which is indicated by the padlocks in Fig. 2. After training first and second neural networks NNA, NNB, first neural network NNA provides first encoded image information A containing information indicative for task t1. Similarly, after training second neural network NNB provides second encoded image information B containing information indicative for task t2.

In a further step, a parametrizable distribution is selected which comprise multiple parameters to be chosen and which is suitable to describe a probability distribution. For example, said parametrizable distribution may describe a probability function in a parametrized way, i.e. the parametrizable distribution defines a function family based on its parameters and after determining the parameters, the parametrizable distribution defines a probability function Q(A|B) which provides the probability of the occurrence of A if B occurred.

After selecting a parametrizable distribution, an auxiliary neural network AUXNN is created which implements said parametrizable distribution.

In the following, said auxiliary neural network AUXNN is connected with first neural network NNA and second neural network NNB as shown in Fig. 2 in order to obtain estimation neural network ENN. Afterwards, the auxiliary neural network AUXNN is trained in order to determine parameters of the parametrizable distribution. In other words, by training the auxiliary neural network AUXNN, the parameters of the parametrizable distribution are modified in order to minimize cross-entropy loss on the output of auxiliary neural network AUXNN (i.e. determining logQ(A|B)) thereby obtaining an approximation of probability function P(A|B) according to equation 3. During said training, the weights of first and second neural network NNA, NNB are kept constant and only the weights of auxiliary neural network AUXNN are modified to minimize cross-entropy loss.

As mentioned before, input information X of estimation neural network ENN is image information which comprise a plurality of data points. Preferably, 10gQ(A|B)-information is calculated for multiple different data points of image information X and an average of 10gQ(A|B)-information obtained from multiple different data points of image information X is calculated. Said average value over 10gQ(A|B)-information obtained from multiple different data points can be used for estimating conditional entropy H(A|B), based on which it is possible to approximate I(A|B).

The estimate of conditional entropy H(A|B) may be used as information share measure, indicating how much information contains second encoded image information B about first encoded image information A.

It is worth mentioning that information share measure is not symmetric, i.e. conditional entropy H(A|B) is different to conditional entropy H(B|A). As such, for each tuple of tasks, two information share measures has to be calculated.

As mentioned before, information share measure is an indicator how much information contains second encoded image information B about first encoded image information A. When tasks t1 and t2 are highly compatible to be processed in a joint encoder portion, information share measure (which is in the present example conditional entropy) is a small positive number close to zero (e.g. lower than 1, especially lower than 0.5). When tasks t1 and t2 are not compatible to be processed in a joint encoder portion, information share measure is a larger positive number (e.g. greater than 1).

In order to determine task compatibility of multiple tasks, two information share measures have to be calculated for each tuple of tasks (i.e. for example H(A|B) and H(B|A)).

Fig. 4 shows a table which includes values of information share measure for five tasks t1 - t5. The values indicate the task compatibility of tuples of tasks in both directions. For example, task t1 may be detecting pedestrians in image information, task t2 may be detecting the pose of an object, especially, the pose of pedestrians, task t3 may be a task for classifying the future motion, respectively, behavior of an object, especially a pedestrian, task t4 may be a task for detecting traffic signs and task t5 may be a task for detecting drivable area.

So, for example, the value included in first column, second row is indicative for the difficulty to estimate the pose of an object based on the information "pedestrian".

In order to determine tuples of tasks to be processed in a joint encoder portion, a threshold value is chosen. Said threshold value indicates a threshold below which a pair of tasks should be processed jointly by a single encoder portion. According to the present example, threshold value is 0.6. All data fields of Fig. 4 fulfilling the condition that information share measure is lower than threshold value are marked by a gray background in Fig. 4.

It is worth mentioning, because of upper-mentioned non-symmetry of information share measure, is has to be checked if information share measure is lower than threshold value in both fields referring to a certain tuple of tasks. In the present case, information share measures regarding tasks t2 and t3 and tasks t1 und t4 are below said threshold value and should therefore be processed in joint encoder portions.

In addition, the distribution of computational resources is performed according to the association of tasks to the encoder portions. More in detail, computational resources are distributed to the encoder portions according to the number of tasks to be processed by the respective encoder portion. Preferably, computational resources are equally distributed based on the number of tasks to be processed. Therefore, in the present example, an encoder portion handling only one task is provided with 1/5 of whole computational resources and encoder portions handling two tasks are provided with 2/5 of whole computational resources.

Fig. 5 illustrates the neural network architecture which shows joint encoder portions handling pairs of tasks according to the results of table 4. Tasks t1 and t4, respectively t2 and t3, are handled by joint encoder portions whereas task t5 is handled by a separate encoder portion. The decoder comprises separate decoder portions for each task t1 - t5. After determining task clusters for multitask learning, the resulting neural network according to Fig. 5 has to be trained.

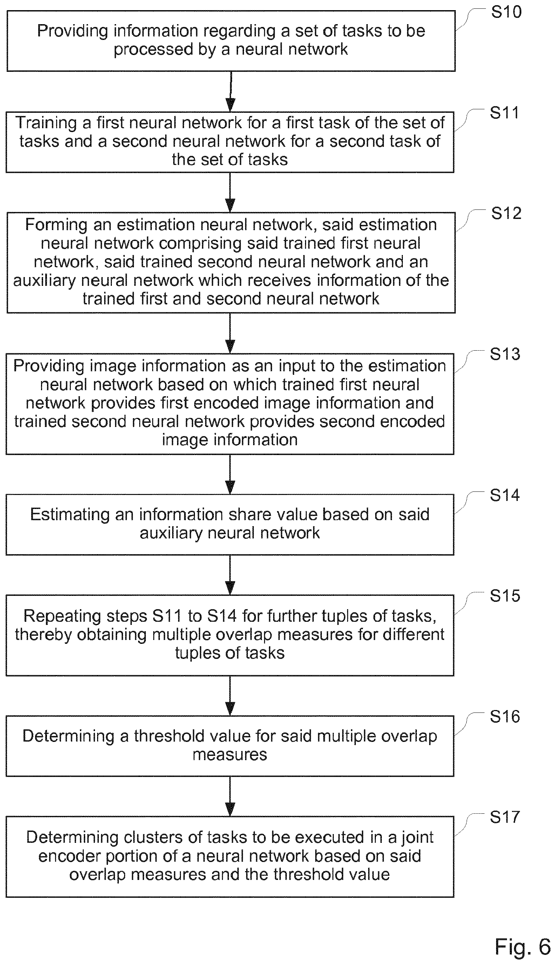

Fig. 6 shows a block diagram illustrating the method steps of a method for determining clusters of tasks for a multitask-learning neural network.

As a first step, information regarding a set of tasks to be processed by a neural network is provided (S10).

After receiving said task information, a first neural network is trained for a first task of the set of tasks and a second neural network is trained for a second task of the set of tasks (S11).

After training said neural networks, an estimation neural network is formed. Said estimation neural network comprises said trained first neural network, said trained second neural network and an auxiliary neural network which receives information of the trained first and second neural network (S12).

After building said estimation neural network, image information is provided as an input to the estimation neural network. Based on said image information, said trained first neural network provides first encoded image information and said trained second neural network provides second encoded image information (S13).

As a further step, an information share measure is estimated based on said auxiliary neural network, said information share measure being a measure regarding how much information contains second encoded image information about first encoded image information or vice versa (S14).

Upper-mentioned steps S11 to S14 are repeated for further tuples of tasks, thereby obtaining multiple information share measures for different tuples of tasks (S15).

A threshold value is determined for said multiple information share measures, said threshold value indicating a limit for the information overlap according to which a pair of tasks should be executed in a joint encoder portion of a neural network (S16).

Finally, clusters of tasks to be executed in a joint encoder portion of a neural network are determined based on said information share measures and the threshold value (S17).

It should be noted that the description and drawings merely illustrate the principles of the proposed invention. Those skilled in the art will be able to implement various arrangements that, although not explicitly described or shown herein, embody the principles of the invention.

**List of reference numerals**

| | |
|---|---|
| A | first encoded image information |
| AUXNN | auxiliary neural network |
| B | second encoded image information |
| E1 - E3 | encoder portion |
| ENN | estimation neural network |
| NN | neural network |
| NNA | first neural network |
| NNB | second neural network |
| t1 - t5 | task |
| X | image information |

**Claims**

1.  Computer-implemented method for determining clusters of tasks, said clusters at least partially including multiple tasks (t1 - t5) to be executed in a joint encoder portion (E1 - E3) of a neural network (NN), the method comprising the steps of:

    a) Providing information regarding a set of tasks to be processed by a neural network (S10);
    b) Training a first neural network (NNA) for a first task of the set of tasks and a second neural network (NNB) for a second task of the set of tasks (t1 - t5) (S11);
    c) Forming an estimation neural network (ENN), said estimation neural network (ENN) comprising said trained first neural network (NNA), said trained second neural network (NNB) and an auxiliary neural network (AUXNN) which receives information of the trained first (NNA) and second neural network (NNB) (S12);
    d) Providing image information (X) as an input to the estimation neural network (ENN) based on which trained first neural network (NNA) provides first encoded image information (A) and trained second neural network (NNB) provides second encoded image information (B) (S13);
    e) Estimating an information share measure based on said auxiliary neural network (AUXNN), said information share measure being a measure regarding how much information contains second encoded image information (B) about first encoded image information (A) or vice versa (S14);
    f) Repeating steps b) - e) for further tuples of tasks, thereby obtaining multiple information share measures for different tuples of tasks (S15);
    g) Providing a threshold value for said multiple information share measures, said threshold value indicating a limit for the information overlap according to which a pair of tasks (t1 - t5) should be executed in a joint encoder portion (E1 - E3) of a neural network (NN) (S16);
    h) Determining clusters of tasks (t1 - t5) to be executed in a joint encoder portion (E1 - E3) of a neural network based on said information share measures and the threshold value (S17).

2.  Method according to claim 1, wherein:

    - the step of estimating an information share measure based on said auxiliary neural network (AUXNN) includes approximating an upper bound of information missing in second encoded image information compared to first encoded image information; or
    - the step of estimating an information share measure based on said auxiliary neural network (AUXNN) includes approximating a lower bound of information included in second encoded image information compared to first encoded image information.

3.  Method according to claim 1 or 2, wherein the step of estimating an information share measure includes reducing a cross entropy loss defined on the information output of said auxiliary neural network (AUXNN) by training the auxiliary neural network (AUXNN).

4.  Method according to anyone of preceding claims, wherein the step of estimating an information share measure includes training said auxiliary neural network (AUXNN) by adapting the weights of said auxiliary neural network (AUXNN) and keeping the weights of trained first neural network (NNA) and the weights of trained second neural network (NNB) constant.

5.  Method according to anyone of preceding claims, wherein the step of estimating an information share measure is performed based on a variational approach, specifically based on variational mutual information maximization approach.

6.  Method according to anyone of preceding claims, wherein the step of training a first neural network (NNA) comprises training an encoder of the first neural network (NNA) for the first task and the step of training a second neural network (NNB) comprises training an encoder of the second neural network (NNB) for the second task.

7.  Method according to anyone of preceding claims, wherein the step of estimating an information share measure based on said auxiliary neural network (AUXNN) comprises choosing a parametrizable distribution, said parametrizable distribution providing a parametrizable probability distribution function which can be used for determining the conditional entropy of the first encoded image (A) given the second encoded image (B), that is how much information content exists in first encoded image (A) which is not covered in the second encoded image (B)

8. Method according to claim 7, wherein the step of estimating an information share measure based on said auxiliary neural network (AUXNN) comprises determining parameters of said parametrizable distribution by training the auxiliary neural network (AUXNN) in order to obtain said probability distribution function.

9. Method according to anyone of preceding claims, wherein the step of estimating an information share measure based on said auxiliary neural network (AUXNN) comprises calculating information share measures for multiple different data points of multi-dimensional image information and calculating a mean information share measure by averaging said information share measures.

10. Method according to anyone of the preceding claims, wherein information share measures for different tuples of tasks (t1 - t5), specifically for all tuples of tasks, are calculated in both directions, namely, per each tuple of tasks, a first information share measure being indicative that certain information regarding a second task is also included in first encoded image information (A), given the fact that said information regarding a second task is included in second encoded image information (B) and a second information share measure being indicative that certain information regarding a first task is also included in second encoded image information (B), given the fact that said information regarding a first task is included in first encoded image information (A).

11. Method according to claim 10, wherein the step of determining clusters of tasks comprises grouping tasks (t1 - t5) together to be executed in a joint encoder portion (E1 - E3) of a neural network (NN) if the first and second information share measure is below the determined threshold value.

12. Method according to anyone of the preceding claims, wherein the step of determining clusters of tasks is performed such that the number of task groups and therefore the number of encoder portions (E1 - E3) performing said task groups is minimized.

13. Method according to anyone of the preceding claims, wherein computing resources are allocated to each joint encoder portion (E1 - E3) of the neural network based on the number of tasks (t1 - t5) being handled by the respective joint encoder portion (E1 - E3).

14. Method to anyone of the preceding claims, wherein the set of tasks to be processed by a neural network (NN) include at least one of the following tasks: depth estimation, detection of pedestrians, detection of traffic signs, pose detection of pedestrians, detection of drivable area.

15. System for determining clusters of tasks, said clusters at least partially including multiple tasks (t1 - t5) to be executed in a joint encoder portion (E1 - E3) of a neural network (NN), the system being configured to execute the steps of:

a) Providing information regarding a set of tasks to be processed by a neural network (S10);
b) Training a first neural network (NNA) for a first task of the set of tasks and a second neural network (NNB) for a second task of the set of tasks (t1 - t5) (S11);
c) Forming an estimation neural network (ENN), said estimation neural network (ENN) comprising said trained first neural network (NNA), said trained second neural network (NNB) and an auxiliary neural network (AUXNN) which receives information of the trained first (NNA) and second neural network (NNB) (S12);
d) Providing image information (X) as an input to the estimation neural network (ENN) based on which trained first neural network (NNA) provides first encoded image information (A) and trained second neural network (NNB) provides second encoded image information (B) (S13);
e) Estimating an information share measure based on said auxiliary neural network (AUXNN), said information share measure being a measure regarding how much information contains second encoded image information (B) about first encoded image information (A) or vice versa (S14);
f) Repeating steps b) - e) for further tuples of tasks, thereby obtaining multiple information share measures for different tuples of tasks (S15);
g) Providing a threshold value for said multiple information share measures, said threshold value indicating a limit for the information overlap according to which a pair of tasks (t1 - t5) should be executed in a joint encoder portion (E1 - E3) of a neural network (NN) (S16);
h) Determining clusters of tasks (t1 - t5) to be executed in a joint encoder portion (E1 - E3) of a neural network based on said information share measures and the threshold value (S17).

Fig. 1

Fig. 2

H(A)

H(B)

| H(A\|B) | I(A;B) | H(B\|A) |

Fig. 3

|  | task t1 | task t2 | task t3 | task t4 | task t5 |
|---|---|---|---|---|---|
| task t1 | 0 | 1,5 | 1,1 | 0,5 | 0,7 |
| task t2 | 1,4 | 0 | 0,2 | 1,4 | 1,2 |
| task t3 | 0,9 | 0,3 | 0 | 1,3 | 2,1 |
| task t4 | 0,3 | 1,1 | 1,5 | 0 | 0,9 |
| task t5 | 0,9 | 0,8 | 0,8 | 0,8 | 0 |

Fig. 4

```
                                    Decoder
                                    task t1

          Encoder                   Decoder
          tasks t1 and t4 (2/5)     task t4

input     Encoder                   Decoder        output
          tasks t2 and t3 (2/5)     task t2

          Encoder                   Decoder
          tasks t5 (1/5)            task t3

                                    Decoder
                                    task t5
```

Fig. 5

Providing information regarding a set of tasks to be processed by a neural network ⌐ S10

Training a first neural network for a first task of the set of tasks and a second neural network for a second task of the set of tasks ⌐ S11

Forming an estimation neural network, said estimation neural network comprising said trained first neural network, said trained second neural network and an auxiliary neural network which receives information of the trained first and second neural network ⌐ S12

Providing image information as an input to the estimation neural network based on which trained first neural network provides first encoded image information and trained second neural network provides second encoded image information ⌐ S13

Estimating an information share value based on said auxiliary neural network ⌐ S14

Repeating steps S11 to S14 for further tuples of tasks, thereby obtaining multiple overlap measures for different tuples of tasks ⌐ S15

Determining a threshold value for said multiple overlap measures ⌐ S16

Determining clusters of tasks to be executed in a joint encoder portion of a neural network based on said overlap measures and the threshold value ⌐ S17

Fig. 6

Europäisches
Patentamt

European
Patent Office

Office européen
des brevets

# EUROPEAN SEARCH REPORT

Application Number

EP 19 21 1218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON VANDENHENDE ET AL: "Branched Multi-Task Networks: Deciding What Layers To Share", ARXIV.ORG, CORNELL UNIVERSITY LIBRARY, 201 OLIN LIBRARY CORNELL UNIVERSITY ITHACA, NY 14853, 2 November 2019 (2019-11-02), XP081526550, * 1, lines 39-45 * * page 3, lines 1-2 * * 3, lines 6-8 * * Algorithm 1; figure 1 * * 3.1 * * 3.2 * * 4, lines 1-3 * * 4.2, line 3 * | 1-15 | INV. G06N3/04 G06N3/08 |
| A | YU ZHANG ET AL: "A Survey on Multi-Task Learning", ARXIV.ORG, CORNELL UNIVERSITY LIBRARY, 201 OLIN LIBRARY CORNELL UNIVERSITY ITHACA, NY 14853, 25 July 2017 (2017-07-25), XP081326951, * the whole document * | 1-15 | |
| A | KSHITIJ DWIVEDI ET AL: "Representation Similarity Analysis for Efficient Task taxonomy & Transfer Learning", ARXIV.ORG, CORNELL UNIVERSITY LIBRARY, 201 OLIN LIBRARY CORNELL UNIVERSITY ITHACA, NY 14853, 26 April 2019 (2019-04-26), XP081174113, * the whole document * | 1-15 | |

TECHNICAL FIELDS SEARCHED (IPC)

G06N

-/--

The present search report has been drawn up for all claims

| Place of search | Date of completion of the search | Examiner |
|---|---|---|
| The Hague | 28 May 2020 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 19 21 1218

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NIU XIANGYU ET AL: "Latent Group Structured Multi-task Learning", 2018 52ND ASILOMAR CONFERENCE ON SIGNALS, SYSTEMS, AND COMPUTERS, IEEE, 28 October 2018 (2018-10-28), pages 850-854, XP033521172, DOI: 10.1109/ACSSC.2018.8645435 [retrieved on 2019-02-19] * the whole document * | 1-15 | |
| A | US 2018/157972 A1 (HU RUI [US] ET AL) 7 June 2018 (2018-06-07) * the whole document * | 1-15 | |
| A | US 2019/065944 A1 (HOTSON GUY [US] ET AL) 28 February 2019 (2019-02-28) * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 28 May 2020 | Aoun, Marc |

EPO FORM 1503 03.82 (P04C01)

**EP 3 825 922 A1**

## ANNEX TO THE EUROPEAN SEARCH REPORT
## ON EUROPEAN PATENT APPLICATION NO.

EP 19 21 1218

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2020

| Patent document cited in search report | | Publication date | Patent family member(s) | | Publication date |
|---|---|---|---|---|---|
| US 2018157972 | A1 | 07-06-2018 | NONE | | |
| US 2019065944 | A1 | 28-02-2019 | CN 109426262 A | | 05-03-2019 |
| | | | DE 102018120635 A1 | | 28-02-2019 |
| | | | US 2019065944 A1 | | 28-02-2019 |

EPO FORM P0459

For more details about this annex : see Official Journal of the European Patent Office, No. 12/82